# EUROPÄISCHE PATENTSCHRIFT

(11) **EP 1 737 722 B1**
(45) Veröffentlichungstag und Bekanntmachung des Hinweises auf die Patenterteilung: **09.01.2008**
(21) Anmeldenummer: 05738217.8
(22) Anmeldetag: 09.04.2005
(51) Int. Cl.: B62D 5/065, B62D 5/09

(54) **HYDRAULISCHES SERVO-LENKSYSTEM MIT OFFENER MITTE SOWIE BETRIEBSVERFAHREN HIERFÜR**
OPEN CENTER HYDRAULIC POWER-ASSISTED STEERING SYSTEM AND METHOD FOR THE OPERATION THEREOF
SYSTEME DE DIRECTION ASSISTEE HYDRAULIQUE A CENTRE OUVERT ET SON PROCEDE DE FONCTIONNEMENT

(30) Priorität: 20.04.2004 DE 102004018919; 27.11.2004 DE 102004057340
(43) Veröffentlichungstag der Anmeldung: 03.01.2007
(73) Patentinhaber: Bayerische Motoren Werke Aktiengesellschaft, 80809 München (DE)
(72) Erfinder: BOOTZ, Andreas, 80804 München (DE)
(86) Internationale Anmeldenummer: PCT/EP2005/003765
(87) Internationale Veröffentlichungsnummer: WO 2005/105549

(56) Entgegenhaltungen:
- EP-A- 1 006 041
- DE-A1- 2 931 240
- DE-A1- 4 409 928
- DE-A1- 10 246 490
- DE-C1- 19 603 270

## Beschreibung

Die Erfindung betrifft ein hydraulisches Servo-Lenksystem mit offener Mitte (Open-Center-Lenksystem), wobei ein die Unterstützungskraft in ein Lenkgetriebe einleitender Lenkzylinder über ein Lenkventil in Form eines mechanisch verstellbaren Drehschieberventils ähnlich den üblichen Open-Center-Lenkventilen oder ein elektrohydraulisches Lenkventil, stets mit einem Druckbereich und einem Tankbereich eines Hydraulikkreislaufs verbunden ist, weiterhin mit einer hinsichtlich ihres Förder-Volumenstromes regelbaren Hydraulikpumpe und einem Druckspeicher für das Hydraulikmedium im Druckbereich, und ferner mit einem stromauf des Lenkventils vorgesehenen Freigabeventil, über das der Volumenstrom im Druckbereich einstellbar ist. Den nächstkommenden bekannten Stand der Technik beschreibt die DE 44 09 928 A1, die die Merkmale des Oberbegriffs des Anspruchs 1 offenbart.

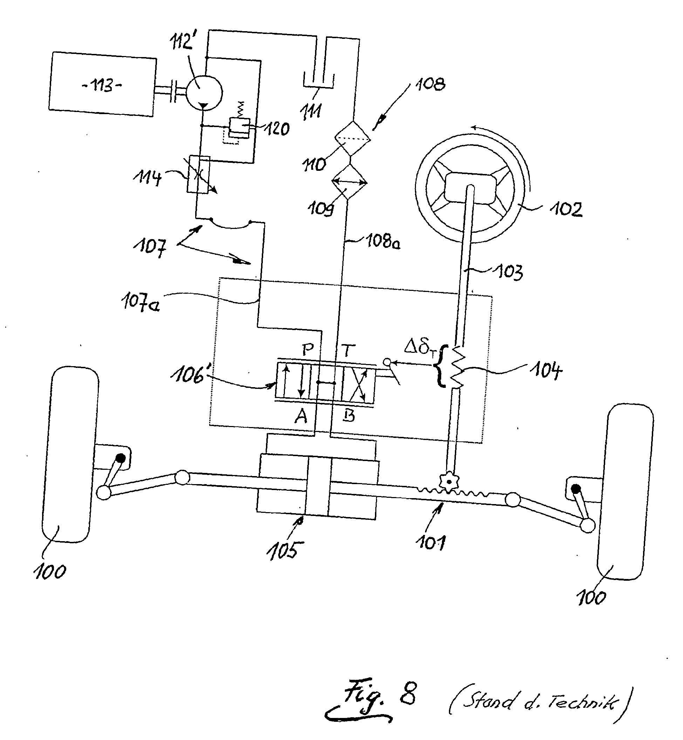

Ein übliches hydraulisches Lenkhilfesystem eines Kraftfahrzeugs, bspw. eines Personenkraftwagens bzw. ein übliches Servo-Lenksystem mit offener Mitte, welches sich vom genannten nächstkommenden Stand der Technik signifikant unterscheidet, ist in der beigefügten Figur 8 schematisch dargestellt. Dabei sind mit der Bezugsziffer 100 die lenkbaren Vorderräder eines zweispurigen Kraftfahrzeugs gekennzeichnet, die über ein Lenkgetriebe 101 um ihre Lenkachse verschwenkt oder eingeschlagen, d.h. in bekannter Weise gelenkt werden können. Initiiert wird dies vom Fahrer des Kraftfahrzeugs mit seinem Lenkrad 102, das über eine Lenkspindel 103 unter Zwischenschaltung eines sog. Torsionsstabes 104 mit dem Lenkgetriebe 101 verbunden ist. In dieses Lenkgetriebe 101 kann über einen als hydraulischen Gleichlaufzylinder ausgebildeten sog. Lenkzylinder 105 eine Unterstützungskraft eingeleitet werden. Dies erfolgt in Abhängigkeit von einem vom Fahrer mit seinem Lenkrad vorgegebenen Lenkeinschlag über ein Lenkventil 106', dessen Betätigung an den Torsionsstab 104 bzw. an das an diesem anliegende Torsionsmoment gekoppelt ist, was in der Figur durch "Δδ_{T}" gekennzeichnet ist.

Figürlich dargestellt ist dieses Lenkventil 106' in seiner neutralen Mittelstellung, in der kein Lenkwinkel vorgegeben und somit kein Unterstützungsmoment angefordert ist. Mit seinen beiden Ausgängen A, B ist dieses Lenkventil 106' mit den beiden einander gegenüberliegenden Kammern des Lenkzylinders 105 verbunden, während an der Eingangsseite des Lenkventils 106' zwei Hydraulikleitungen anliegen, nämlich eine eines sog. hydraulischen Druckbereichs 107 (Eingang P) und eine weitere eines im wesentlichen drucklosen sog. Tankbereichs 108 (Eingang T). Eine Hydraulikleitung 108a des Tankbereichs 108 führt vom Lenkventil 106' über einen Wärmetauscher 109 sowie ein Filter 110 in einen Hydrauliktank 111. Aus diesem kann eine Hydraulikpumpe 112', die bspw. direkt vom Antriebsaggregat 113 des mit diesem Lenksystem ausgerüsteten Kraftfahrzeugs angetrieben wird, Hydraulikmedium über eine dem Druckbereich 107 zugeordnete Hydraulikleitung 107a zum anderen Eingang des Lenkventils 106' fördern, und zwar hier mit durch ein geeignetes Ventil 114 regelbarem Volumenstrom. Im Bereich der Hydraulikpumpe 112' ist ferner noch ein geeignet verschaltetes Druckbegrenzungsventil 120 vorgesehen.

Derartige übliche hydraulische Lenkhilfesysteme bzw. Servo-Lenksysteme für Kraftfahrzeuge zeichnen sich durch eine hohe Energiedichte, hohe maximale Kräfte und ein gutes dynamisches Verhalten aus. Nachteilig bei diesen üblichen auf dem Markt befindlichen Systemen ist jedoch deren relativ schlechter Wirkungsgrad, der durch hohe Verlustleistungen bedingt ist und den Kraftstoffverbrauch des Kraftfahrzeugs bzw. von dessen auch die Lenkhilfe-Energie bereitstellenden Antriebsaggregat erhöht. Der Grund für die relativ hohe Verlustleistung ist das angewandte Wirkprinzip der Widerstandssteuerung mit einem konstanten Hydraulik-Volumenstrom. Das Lenkventil 106', welches den hydraulischen Differenzdruck im Lenkzylinder 105 steuert, weist - wie bereits erläutert und in **Fig.8** dargestellt - eine geöffnete Mittelstellung ("offene Mitte", "open-center", "Schwimmstellung") auf, in der (bei Neutralstellung) der Druckbereich 107 und der Tankbereich 108 miteinander ebenso wie die beiden Kammern des Lenkzylinders 105 miteinander verbunden sind, so dass u.a. das Lenkventil 106' permanent durchflossen wird. Aufgrund des Durchflusswiderstandes sämtlicher Hydraulikleitungen (u.a. 107a und 108a) und der weiteren durchströmten Komponenten (Lenkventil 106', Filter 110, Kühler 109) wird eine Verlustleistung erzeugt, welche die letztendlich zur Unterstützung des Fahrers notwendige Lenkleistung um ein Vielfaches übersteigt. Insbesondere beim Fahren ohne Einlenken wird permanent hydraulische Leistung verbraucht, welche zu einer Erhöhung der Temperatur des Hydraulikmediums sowie zur bereits genannten Erhöhung des Kraftstoffverbrauches des Kraftfahrzeugs führt, nachdem dessen Antriebsaggregat direkt oder indirekt die Hydraulikpumpe 112' zur Förderung des die Lenkunterstützung liefernden Hydraulikmediums antreibt.

Ein weiterer Grund für die hohe Verlustleistung ist die Tatsache, dass die Hydraulikpumpe üblicher Lenkhilfesysteme meist als eine Pumpe mit konstantem Verdrängungsvolumen ausgeführt ist und über eine mechanische Transmission direkt an die Drehzahl des Fahrzeug-Antriebsaggregats, insbesondere eines Verbrennungsmotors gekoppelt ist, bspw. durch Verwendung eines Riementriebes. Der von der Hydraulikpumpe geförderte Volumenstrom ist damit proportional zur Drehzahl des Antriebsaggregats. Da bereits bei niedrigen Drehzahlen von unter 1000 U/min der für schnelle Lenkbewegungen notwendige Volumenstrom am Eingang des Lenkventils zur Verfügung stehen muss, wird der über die notwendige Menge hinaus geförderte Volumenstrom über ein Drei-Wege-Stromregelventil (vgl. Bezugsziffer 114 in **Figur 8)** vom Druckbereich 107 des Hydraulikkreislaufs zum sog. Tankbereich 108, d.h. zur Saugseite der Hydraulikpumpe 112' zurückgeführt. Der an der Druckseite der Hydraulikpumpe 112 anstehende Druck repräsentiert den Durchlaufdruck des gesamten Systems. Somit wird das Produkt des über den Regelstrom hinausgehende Volumenstromes und des Durchlaufdruckes in Verlustleistung umgesetzt.

Zur Verbesserung des Wirkungsgrades von Lenkhilfesystemen mit konstantem Volumenstrom existieren zahlreiche Ansätze. So kann beispielsweise die Hydraulikpumpe nicht direkt vom Fahrzeug-Antriebsaggregat, sondern über einen Elektromotor angetrieben werden. Somit kann der im soweit beschriebenen konventionellen System über den notwendigen konstanten Volumenstrom hinaus gehende Verlustanteil vermieden werden. Der Förder-Volumenstrom der Hydraulikpumpe wird dabei elektronisch geregelt. Beim Einlenken, d.h. bei Initiierung eines Lenkvorgangs wird die Drehzahl des Elektromotors hochgesetzt, so dass während des Lenkvorganges der geforderte Nennvolumenstrom zur Verfügung steht. Beim Fahren ohne Einlenken muss das System jedoch permanent mit einer Standby-Drehzahl betrieben werden, damit bei schnellen Lenkvorgängen der benötigte Volumenstrom sehr schnell zur Verfügung steht. Folglich produzieren auch diese elektrohydraulischen Lenkhilfesysteme stets Verluste.

Ein großer Vorteil von Lenkhilfesystemen mit offener Mitte (und einem konstanten Volumenstrom) ist die ausgezeichnete Regelbarkeit des Lenkdifferenzdruckes im Lenkzylinder 105. Das Prinzip der offenen Mitte eignet sich sehr gut zur Regelung des Volumenstromes in die Kammern des Lenkzylinders 105 und somit zur Regelung des Lenkdifferenzdruckes. Dies beruht auf der Tatsache, dass sich bei relativ großen Verstellwegen des Lenkventils 106' der hydraulische Volumenstrom im Lenkhilfesystem kontinuierlich und ohne sprunghafte Änderungen des Durchflusses einstellen lässt.

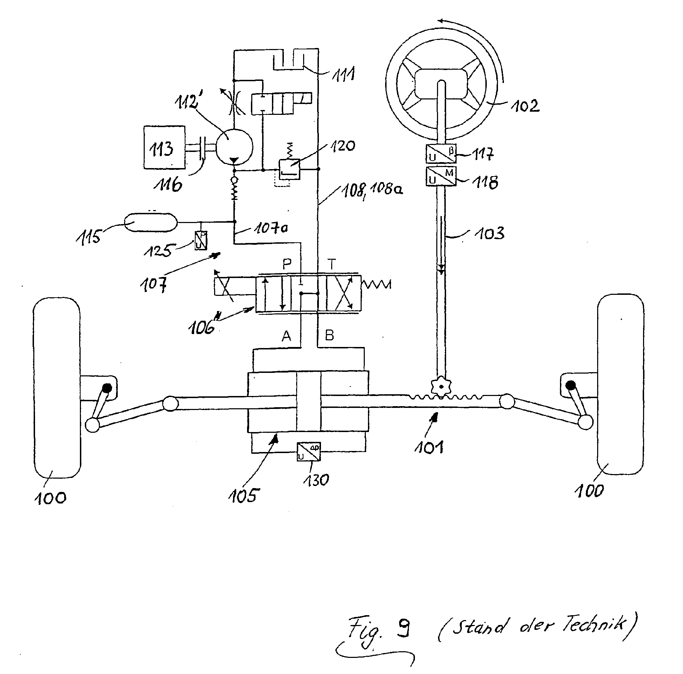

Einen anderen Ansatz zur Verbesserung des Wirkungsgrades von Fahrzeuglenkungen stellen Lenkhilfesysteme mit einem konstanten Versorgungsdruck dar, von denen ein Beispiel in **Figur 9** dargestellt ist. Gleiche Elemente wie bei der Darstellung von **Figur 8** sind dabei mit den gleichen Bezugsziffern versehen. Das Lenkventil 106" ist hier (in **Figur 9)** jedoch anders als bei der Variante nach **Fig.8** ausgeführt, und zwar als ein Lenkventil 106" mit einer geschlossenen Mitte, d.h. es handelt sich um eine dem Fachmann bekannte Closed-Center-Lenkung, bei der bekanntlich während des Fahrens ohne Einlenken kein hydraulischer Volumenstrom umgewälzt wird.

Das von der Hydraulikpumpe 112' geförderte Hydraulikfluid wird bei einer bzw. dieser Closed-Center-Lenkung ("mit geschlossener Mitte") in einem hydraulischen Druckspeicher 115 zwischengespeichert. Hiermit steht jederzeit hydraulische Energie für einen Lenkvorgang zur Verfügung. Der Ladevorgang des Druckspeichers 115 erfolgt über das Einschalten der Hydraulikpumpe 112'. Nachdem ein gewünschter Systemdruck im Druckspeicher 115 erreicht wurde, kann die Hydraulikpumpe 112' wieder abgeschaltet werden. Für den Antrieb dieser Pumpe 112' bestehen mehrere Möglichkeiten. Zum einen ist der Antrieb einer Konstantpumpe durch einen Elektromotor möglich. Alternativ kann mittels einer schaltbaren Kupplung 116 an einer Abtriebswelle des Fzg.-Antriebsaggregats 113 eine direkt angetriebene Konstantpumpe vorgesehen sein. Schließlich besteht die Möglichkeit, regelbare Hydraulikpumpen einzusetzen, z.B. eine sauggeregelte Pumpe oder eine Verstellpumpe. Um dabei ein ausreichend gutes Lenkgefühl im Lenkrad 102 herzustellen, sollte über das Lenkventil 106" ein vom vom Fahrer angelegten Lenkmoment abhängiger Differenzdruck im Lenkzylinder 105 eingestellt werden. Hierbei ist es denkbar, dass das Lenkventil 106" über eine mechanische Vorrichtung, z.B. einen Torsionsstab in der Lenksäule, aus seiner Mittenposition ausgelenkt wird. Vorteilhafter erscheint es jedoch (so wie in Figur 9 dargestellt) das Lenkventil 106" elektronisch zu regeln, und zwar unter Berücksichtigung der Vorgaben des Fahrers, die an der Lenkspindel 103 mittels eines Drehwinkelsensors 117 und eines Drehmomentsensors 118 erfasst werden können. Somit kann z.B. eine geschwindigkeitsabhängige Lenkunterstützung realisiert werden oder auch in kritischen Fahrsituationen ein aktiver fahrdynamischer Eingriff erfolgen.

Ein Nachteil der bekannten Konstantdrucksysteme mit einem Lenkventil mit geschlossener Mitte ist, dass der für die Unterstützung des Fahrers beim Lenkvorgang benötigte Differenzdruck durch ein in seiner Mittenposition vollständig geschlossenes Lenkventil 106" aufgebracht werden muss. Aufgrund der hohen Druckdifferenz am Lenkventil 106" wächst beim Öffnen dieses Lenkventils 106" - auch bei kleinen Öffnungswegen - der Hydraulik-Volumenstrom sprungartig an. Durch diesen sprunghaften Anstieg des Volumenstromes wird eine gewünschte Regelung des Differenzdruckes im Lenkzylinder 105 erschwert bzw. nahezu unmöglich gemacht. Ein stetiges Einregeln eines gewünschten Druckes in der jeweiligen Arbeitskammer des Lenkzylinders 105, wie es für Open-Center-Systeme sehr gut funktioniert, ist an Closed-Center-Lenksystemen nicht oder nur sehr eingeschränkt realisierbar. Dies gilt auch dann, wenn die Verstellwege eines mechanisch betätigten Closed-Center-Lenkventils 106" um ein Vielfaches verkleinert werden, z.B. durch die Versteifung des Torsionsstabes in der Lenkspindel (vgl. Bezugsziffern 104, 103 in **Figur 8).** Auch dann führt der sprunghafte Druckaufbau bei einem konstanten Versorgungsdruck zu einem schnellen Anstieg der Lenkunterstützung und somit zu einem schlechten Lenkgefühl. Die Lenkung wirkt zu leichtgängig und vermittelt keinen guten Kontakt zur Straße. Aber auch bei geregelten Systemen mit elektrohydraulischen Closed-Center-Lenkventilen führt das Öffnen der Ventile zu Druckschwankungen, die das Lenkgefühl negativ beeinflussen. Nur mit Hilfe schneller und daher sehr teurer elektrohydraulischer Ventile lässt sich eine ausreichend gute Regelung der Lenkunterstützung gewährleisten. Jedoch kommen solchen Ventile aufgrund der hohen Kosten für den Einsatz im Fahrzeug nicht in Frage.

Zumindest als theoretischer (und zur vorliegenden Erfindung derzeit bekannter nächstkommender) Stand der Technik ist die DE 44 09 928 A1 zu nennen, die die Vorteile der beiden bislang beschriebenen Systeme miteinander vereint und ein hydraulisches Lenkhilfesystem mit offener Mitte zeigt, das ähnlich den bekannten Lenksystemen mit geschlossener Mitte einen Druckspeicher aufweist. Liegt dabei keine Lenkanforderung vor, so wird bei diesem bekannten System ein relativ geringer Volumenstrom im Hydraulikkreislauf umgewälzt, während mit einer Lenkanforderung ein größerer Volumenstrom aus dem Speicher abgezogen werden kann, woraufhin die Hydraulikpumpe ein größeres Volumen fördert, welches dann nebeneinander sowohl dem Lenkzylinder als auch dem Speicher (zur Wiederbefüllung) zugeführt wird.

An einem solchen grundsätzlich überzeugenden System (nach dem Oberbegriff des Patentanspruchs 1) sind jedoch weitere Verbesserungen möglich, die aufzuzeigen sich die vorliegende Erfindung zur Aufgabe gestellt hat.
Die Lösung dieser Aufgabe ist dadurch gekennzeichnet, dass das Speicherventil schließt, sobald während eines Lenkvorganges der Hydraulikdruck im Druckbereich zwischen dem Freigabeventil und der druckbeaufschlagten Kammer des Lenkzylinders die Höhe des Druckes im Druckspeicher erreicht. Vorteilhafte Weiterbildungen sind Inhalt der Unteransprüche.

Weiter erläutert wird dies anhand von Ausführungsbeispielen, wobei der wesentliche Effekt, nämlich dass nach teilweisen Leeren des Druckspeichers weiter schnell der angeforderte Druck im Hydrauliksystem bereit gestellt werden kann, aus der Beschreibung der beigefügten **Figur 1** hervorgeht, die ähnlich den Darstellungen der als Stand der Technik erläuterten **Figuren 8, 9** und unter Verwendung gleicher Bezugsziffern für gleiche Bauelemente ein erstes Ausführungsbeispiel eines erfindungsgemäßen Lenkhilfesystems zeigt.

Eine regelbare Hydraulikpumpe 112, die insbesondere als Verstellpumpe ausgebildet ist und daher auch als Verstellpumpe 112 bezeichnet wird, wird vom Antriebsaggregat 113 des Fahrzeugs angetrieben und fördert Hydraulikflüssigkeit in eine Hydraulikleitung 107a des sog. Druckbereichs 107. Dabei kann die Hydraulikpumpe 112 hinsichtlich des geförderten Volumenstroms verstellt bzw. eingestellt werden, wobei diese Verstellung elektromechanisch, elektrohydraulisch oder hydraulisch erfolgen kann. Alternativ kann die regelbare Hydraulikpumpe 112 jedoch auch schaltbar sein.

Ein Rückfluss des geförderten Hydraulikfluids von der Hydraulikleitung 107a in die Verstellpumpe 112 wird durch ein Rückschlagventil 119 verhindert. Stromab dieses Rückschlagventils 119 zweigt von der Hydraulikleitung 107a eine Stichleitung 126 ab, die zu einem hydraulischen Druckspeicher 115 führt, der über ein in der Stichleitung 126 angeordnetes sog. Speicherventil 121 vom Rest des Systems, d.h. vom Druckbereich 107 getrennt werden kann. Stromab der Abzweigung dieser Stichleitung 126 ist in der Hydraulikleitung 107a ein sog. Freigabeventil 122 angeordnet, welches den stromauf dessen liegenden Abschnitt des Druckbereichs 107 von den noch weiter stromab gelegenen Komponenten, nämlich insbesondere von einem open-center-Lenkventil 106 trennt.

Der von der Hydraulikpumpe 112 geförderte Hydraulikvolumenstrom wird zunächst dazu genutzt, den Druckspeicher 115, bei welchem es sich vorzugsweise um einen Membranspeicher handeln kann, aufzuladen. Während dieses Beladevorganges ist das Speicherventil 121 daher geöffnet. Wird ein oberes Druckniveau von bspw. 40 bar erreicht, so wird die Hydraulikpumpe 112 zurückgestellt oder abgeschaltet und es wird kein Volumenstrom mehr gefördert. Zunächst geöffnet bleibt dann das Speicherventil 121. Ist die Hydraulikpumpe 112 als Verstellpumpe 112 ausgebildet und wird somit zurückgestellt, so beschränkt sich dann die Eingangsleistung der Hydraulikpumpe 112 auf deren Schleppleistung; andernfalls, nämlich beim Abschalten fällt dann überhaupt kein Leistungsbedarf an. Wird im Druckspeicher 115 ein unteres Druckniveau von bspw. 30 bar erreicht, so beginnt die Hydraulikpumpe 112 wieder mit dem Aufladen des Druckspeichers 115.

Stromab des Freigabeventils 122 ist ein Lenkventil 106 angeordnet, das als Open-Center-Drehschieber-Lenkventil ausgeführt ist, d.h. dieses Lenkventil 106 entspricht prinzipiell einem Lenkventil, wie es in einer konventionellen open-center-Servolenkung (vgl. **Figur 8)** vorgesehen ist, und dient (ebenso) dazu, dem Lenkwunsch des Fahrers folgend Hydraulikmedium in die jeweilige Arbeitskammer des Lenkzylinders 105 einzuleiten bzw. aus der jeweils anderen Arbeitskammer des Lenkzylinders 105 abzuleiten. Von konventionellen Systemen kann sich das Lenkventil 106 jedoch (vorzugsweise) durch einen höheren Druckverlust unterscheiden. Bei gleicher Druckdifferenz zwischen dem Druckanschluß P und dem Tankanschluss T fließt in einem Lenkventil 106 gemäß einer bevorzugten (jedoch nicht zwangsweisen) Ausführungsform der vorliegenden Erfindung in der Neutralstellung oder Mittenstellung somit ein geringerer Volumenstrom als bei konventionellen open-center-Lenkhilfesystemen. Wesentlich ist jedoch, dass es sich beim Lenkventil 106 um ein solches mit offener Mitte handelt, so dass von wenigen Betriebszuständen abgesehen durch dieses Lenkventil 106 nahezu stets ein Hydraulik-Volumenstrom in einer gewissen Höhe fließt - und nicht wie bei einem Closed-Center-Lenkventil vorzugsweise unterbrochen ist. Somit ist gewährleistet, dass der Lenkdifferenzdruck beim beginnenden Einlenken im Lenkzylinder 105 ohne Druck- und Volumenstromsprünge kontinuierlich eingestellt werden kann.

Um einen - von wenigen Betriebszuständen abgesehen - stetigen Volumenstrom durch das Lenkventil 106 zu gewährleisten, muss das Freigabeventil 122 zumindest geringfügig geöffnet sein. Der Öffnungsquerschnitt des Freigabeventils 122 sollte dabei so klein sein, dass nur ein sehr kleiner Volumenstrom von bspw. ca. 0,1 l/min bis 0,4 l/min fließt. Bei einem Speicherdruck von 40 bar beträgt die hydraulische Verlustleistung beim Fahren ohne Lenken, während dem der genannte sehr kleine Volumenstrom fließt, somit nur bis zu 26 Watt. Dabei ist das Freigabeventil 122 vorzugsweise als Sitzventil ausgeführt und wird mit einem pulsweitenmodulierten Signal (vgl. Bezugsziffer 123) angesteuert. Dies gewährleistet ein robustes Verhalten gegenüber elektromagnetischen Einstreuungen, niedrige Kosten und eine nahezu stetige Steuerung des Durchflusses.

Die Ansteuerung des Freigabeventils 122 erfolgt durch eine elektronische Steuereinheit 124, welche im übrigen auch die regelbare Hydraulikpumpe 112 den Anforderungen entsprechend ansteuert. Zur Ansteuerung des Freigabeventils 122 verarbeitet die elektronische Steuereinheit im wesentlichen Signale, die den Lenkwunsch des Fahrers wiedergeben, nämlich diejenigen eines (in Verbindung mit **Fig.9)** bereits genannten Drehwinkelsensors 117 und eines (ebenfalls bereits genannten) Drehmomentsensors 118 (jeweils an der Lenkspindel 103), während zur Ansteuerung der Verstellpumpe 112 zusätzlich das Signal eines Drucksensors 125 in der von der Hydraulikleitung 107a zum Druckspeicher 115 führenden Stichleitung 126 verarbeitet wird. Grundsätzlich sind dabei in den Figuren Leitungen, über die Steuersignale oder Messsignale von bzw. zu der elektronischen Steuereinheit 124 übertragen werden, durch strich-punktierte Linien dargestellt. Wie das bereits genannte und in dieser Stichleitung 126 vorgesehene sog. Speicherventil 121 angesteuert wird, wird an späterer Stelle erläutert, da dies auf unterschiedliche Weise erfolgen kann, bzw. da hierfür verschiedene Varianten angegeben sind.

Was die Ansteuerung des Freigabeventils 122 sowie die genannten wenigen Betriebszustände betrifft, in denen dieses vollständig geschlossen werden kann, so dass dann kein hydraulischer Fluidstrom umgewälzt wird, so ist bei hohen Fahrgeschwindigkeiten des Kraftfahrzeugs eine hydraulische Unterstützung des Fahrers beim Lenken nicht unbedingt notwendig. Daher kann das Freigabeventil 122 in Abhängigkeit bei hohen Fahrgeschwindigkeiten auch vollständig geschlossen werden und die hydraulische Verlustleistung wird dann auf null reduziert. Gleiches gilt auch für alle anderen Betriebszustände des Kraftfahrzeugs, in denen keine hydraulische Unterstützung benötigt wird, bspw. wenn der Fahrer das Fahrzeug mit laufendem Antriebsaggregat 113 verlässt.

Beim Fahren ohne Einlenken kann die Arbeitsweise des erfindungsgemäßen Lenksystems somit dadurch beschrieben werden, dass das Speicherventil 121 stets geöffnet ist, wobei die Regelung der Hydraulikpumpe 112 bzw. Verstellpumpe 112 durch die elektronische Steuereinheit 124 dafür sorgt, dass der Hydraulikdruck im Druckspeicher 115 innerhalb einer definierten Druckspanne auf einem mittleren Druckniveau gehalten wird. Wie vorhergehend erläutert wurde, ist das Freigabeventil 122 entsprechend der Fahrsituation zumeist geringfügig geöffnet oder in wenigen Betriebszuständen auch vollständig geschlossen, d.h. dass entsprechend der Ansteuerung des Freigabeventils 122 entweder kein Volumenstrom durch das Lenkventil 106 fließt oder allenfalls ein kleiner Volumenstrom von bspw. etwa 0,1 l/min bis 0,4 l/min durch das Open-Center-Lenkventil 106 fließt.

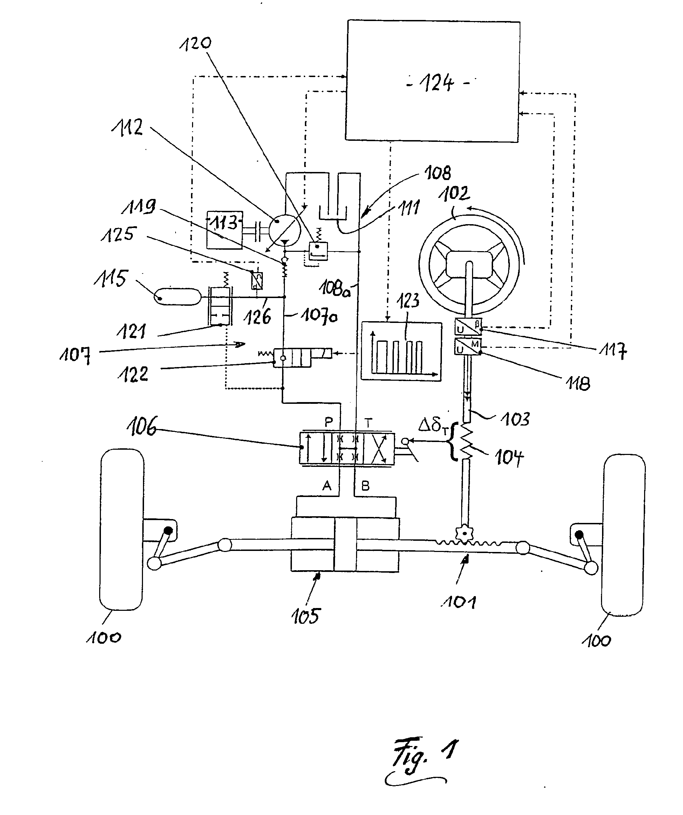

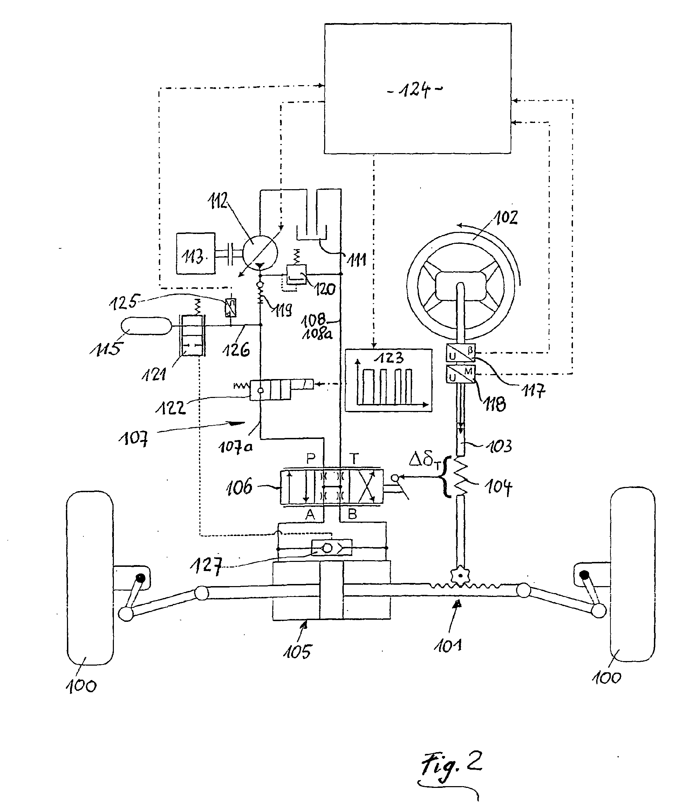

Beim Einlenken hingegen, d.h. wenn der Fahrer das Lenkrad 102 aus seiner Mittelstellung heraus dreht, entsteht durch die geometrische Verdrängung im Lenkzylinder 105 und die Anforderung von unterstützendem Lenkdifferenzdruck aufgrund der Verlagerung des Lenkventils 106 ein Volumenstrombedarf. Dabei wird beim vorliegenden Ausführungsbeispiel nach **Fig.1** sowie bei weiteren Ausführungsbeispielen nach den **Figuren 2-4** das Lenkventil 106 analog dem üblichen Stand der Technik (vgl. die eingangs erläuterte **Fig. 8)** über einen Torsionsstab 104 in der Lenkspindel 103 der Lenkvorgabe des Fahrers entsprechend verlagert. Um nun den genannten Volumenstrombedarf im Druckbereich 107 zu befriedigen, muss das Freigabeventil 122 (vollständig) öffnen. Da zunächst im Druckspeicher 115 ein (kleiner) Anteil von hydraulischer Energie gespeichert und das Speicherventil 121 geöffnet ist, kann auch ohne die Unterstützung durch die Hydraulikpumpe 112 für eine kurze Zeitdauer und bis zu einem bestimmten hydraulischen Arbeitsdruck ein ausreichender Volumenstrom zur Verfügung gestellt werden.

Jedoch wird dann, wenn während eines Lenkvorganges der Hydraulikdruck in der Leitung 107a zwischen dem Freigabeventil 122 und dem Lenkventil 106 - oder alternativ der Druck in der druckbeaufschlagten Kammer des Lenkzylinders 105 - die Höhe des Druckes im Druckspeicher 115 erreicht, dieser Druckspeicher 115 vom System bzw. vom Druckbereich 107 des Lenkhilfesystems abgekoppelt, und zwar durch Schließen des Speicherventils 121. Somit kann ein weiterhin schneller Druckaufbau im Druckbereich 107 über den aktuellen Druck im Druckspeicher 115 hinaus erfolgen. Auch sollte bis zu diesem Zeitpunkt die Verstellpumpe 112 in der Lage sein, einen ausreichend hohen Volumenstrom fördern, d.h. auf ein ausreichend großes Verstellvolumen gestellt worden sein. Das Lenkhilfesystem funktioniert dann wie ein konventionelles Open-Center-Lenkhilfesystem, wobei die Verstellpumpe 112 solange mit hohen Verdrängungsvolumen betrieben wird, als eingelenkt ist bzw. wird. Sinkt abschließend mit Beendigung eines Lenkvorganges, d.h. wenn das Lenkrad 102 nicht weiter gedreht wird, der erforderliche Lenkdifferenzdruck unter den aktuellen Druck im Druckspeicher 115, so kann der Ladevorgang des Druckspeichers 115 von neuem beginnen, d.h. es wird das Speicherventil 121 wieder geöffnet und - wie weiter oben erläutert - der Druckspeicher 115 bei geöffnetem Speicherventil 121 beladen. Abschließend kann das Verdrängungsvolumen der Verstellpumpe 112 wieder auf Null gestellt werden.

Wie aus der vorhergehenden Schilderung eines Lenkvorganges hervorgeht, hat der Druckspeicher 115 im wesentlichen die Funktion, zu Beginn eines Lenkvorganges eine ausreichende Menge von hydraulischer Energie zur Lenkunterstützung bereit zu stellen, und zwar solange, bis die Hydraulikpumpe 112 einen ausreichenden Volumenstrom für die Erfüllung der Funktion eines klassischen Open-Center-Lenksystems liefert. Das Öffnen und die Größe der Öffnung des Freigabeventils 122 kann dabei vorzugsweise an die Größe des Lenkwinkels und/oder an die Höhe der Lenkwinkelgeschwindigkeit (beide Größen sind aus dem Signal des Lenkwinkelsensors 117 ermittelbar) und/oder an die Höhe des Lenkmomentes (dieses ist mittels des Lenkmomentsensors 118 ermittelbar) gekoppelt werden. Dies kann beispielsweise über eine lineare Beziehung erfolgen. Für das Lenkmoment kann bspw. die Zuordnung gelten, dass bei einem Lenkmoment von 0,5 Nm bis 1,5 Nm das Freigabeventil 122 stetig vom Minimalquerschnitt auf seinen Maximalquerschnitt öffnen soll. Grundsätzlich ist dabei durch die funktionelle Verknüpfung des Öffnens und Schließens des Freigabeventils 122 mit den ermittelten Größen Lenkwinkel, Lenkgeschwindigkeit und Lenkmoment gewährleistet, dass in allen Fahrsituationen des Kraftfahrzeugs ausreichend hydraulische Energie vom Druckspeicher 115 und der Hydraulikpumpe 112 für einen Lenkvorgang zur Verfügung gestellt werden kann. Ein Vorteil des Druckspeichers 115 ist es dabei, dass bzw. wenn der Druck bspw. aufgrund einer weichen Gasfeder im Druckspeicher 115 nahezu konstant gehalten werden kann. Ein möglicherweise unstetiges Anfahren und Herunterfahren des Volumenstromes der Hydraulikpumpe 112 wirkt sich somit nicht in starken Druckschwankungen im Druckbereich 107 aus. lm Gegensatz zu klassischen Open-Center-Lenkhilfesystemen wird hier bei zugeschaltetem Druckspeicher 115 der am Lenkventil 106 anliegende Druck von schnellen Schwankungen der Energiezufuhr entkoppelt. Dieses Verhalten erlaubt es, die regelbare Hydraulikpumpe 112 bzw. Verstellpumpe 112 in einem weiten Volumenstrombereich schnell zu verstellen, ohne dass das Lenkverhalten des Kraftfahrzeugs hierdurch maßgeblich beeinflusst wird.

Wie geschildert wurde, wird dann, wenn während eines Lenkvorganges der Druck im Druckspeicher 115 unter den am Lenkzylinder 105 benötigten Druck fällt bzw. genauer spätestens dann, wenn der Druck in der jeweils druckbeaufschlagten Arbeitskammer des Lenkzylinders 105 oder nahe derselben die Höhe des aktuellen Speicherdrucks erreicht, das zunächst offene Speicherventil 121 geschlossen. Dieses Schließen des Speicherventils 121 sowie das im wesentlichen mit Beendigung eines Lenkvorganges wieder erforderliche Öffnen des Speicherventils 121 (zur Wiederbeladung des Druckspeichers 115) kann dabei auf unterschiedliche Weise erfolgen. Wie beim Ausführungsbeispiel nach **Figur 1** dargestellt kann dieses Öffnen und Schließen des Speicherventils 121 durch eine hydraulische Vorsteuerung erfolgen, indem beispielsweise der Druck in der Hydraulikleitung 107a zwischen dem Freigabeventil 122 und dem Lenkventil 106 zur Ansteuerung des Speicherventils 121 verwendet wird, wobei die Übertragung des sog. Steuerdruckes durch eine gestrichelte Linie dargestellt ist.

Nach einer alternativen, in **Figur 2** dargestellten Ausführungsform der vorliegenden Erfindung wird das Speicherventil 121 mit Hilfe eines Wechselventils 127, welches zwischen die Kammern des Lenkzylinders 105 geschaltet ist, angesteuert. Mit dieser Anordnung wird die für das Schließen und Öffnen des Speicherventils 121 unmittelbar notwendige Information, nämlich der Differenzdruck im Lenkzylinder 105, direkt für die Ansteuerung des Speicherventils 121 verwendet (vgl. die gestrichelte Linie vom Wechselventil 127 zum Speicherventil 121). Druckverluste zwischen dem Eingang des Lenkventils 106 und der jeweiligen druckbeaufschlagten Kammer des Lenkzylinders 105 beeinflussen die Ansteuerung des Speicherventils 121 somit vorteilhafterweise nicht.

Im Sinne einer vorteilhaften Ausbildung kann die Ladestrategie und Entladestrategie des Druckspeichers 115 optimiert werden, und zwar vorzugsweise durch eine zumindest quasi stetige Verstellbarkeit des Speicherventils 121. Zwei gegenläufige Effekte können so durch eine geeignete Auslegung der Federkennlinie des Speicherventils 121 bzw. der Strömungskanten dieses Speicherventils 121 beeinflusst werden. Mit einer quasi kontinuierlichen Verstellbarkeit des Speicherventils 121 kann nämlich ein schlagartiges Trennen des Druckspeichers 115 vom Druckbereich 107 und somit ein zu schneller sprunghafter Druckaufbau, der sich im Lenkgefühl bemerkbar macht, vermieden werden. Bei einem nur nahezu geschlossenen Speicherventil 121 ist es ferner aufgrund von dessen Drosselwirkung möglich, schnelle Druckänderungen in der Hydraulikleitung 107a des Druckbereichs zu realisieren und bei länger anhaltendem hohen Druck und niedrigem Volumenstrombedarf gleichzeitig den Druckspeicher 115 wieder aufzuladen. Hierbei ist auch ein Aufladen des Druckspeichers 115 über den normalen Ladedruck hinaus möglich.

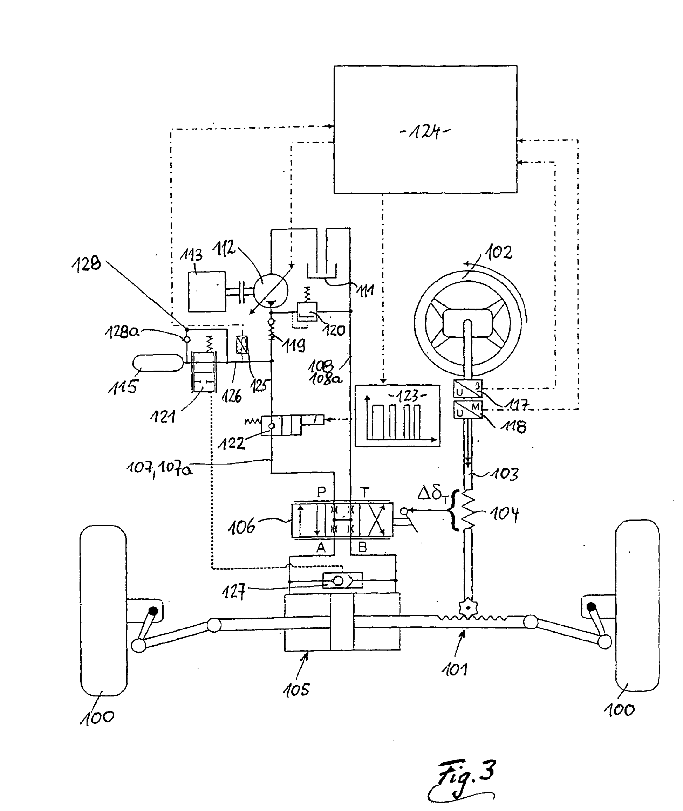

Die Dynamik des Druckaufbaus im Druckbereich 107 kann insbesondere für schnelle Lenkmanöver weiter verbessert werden, wenn ein Bypasskanal 128 mit einem zum Druckspeicher 115 hin sperrenden Rückschlagventil 128a parallel zum Speicherventil 121 vorgesehen ist, so wie dies im Ausführungsbeispiel nach **Figur 3** dargestellt ist. Das Speicherventil 121 kann dann für die relativ langsamen Ladevorgänge mit einem sehr engen Durchflussquerschnitt versehen werden, so dass der im vorgehenden Absatz genannte Effekt nutzbar ist. Gleichzeitig ist aber durch die Anordnung des Rückschlagventils 128a eine sehr schnelle Volumenabgabe aus dem Druckspeicher 115 möglich, was die tatsächlich zur Verfügung stehende Lenkleistung erhöht.

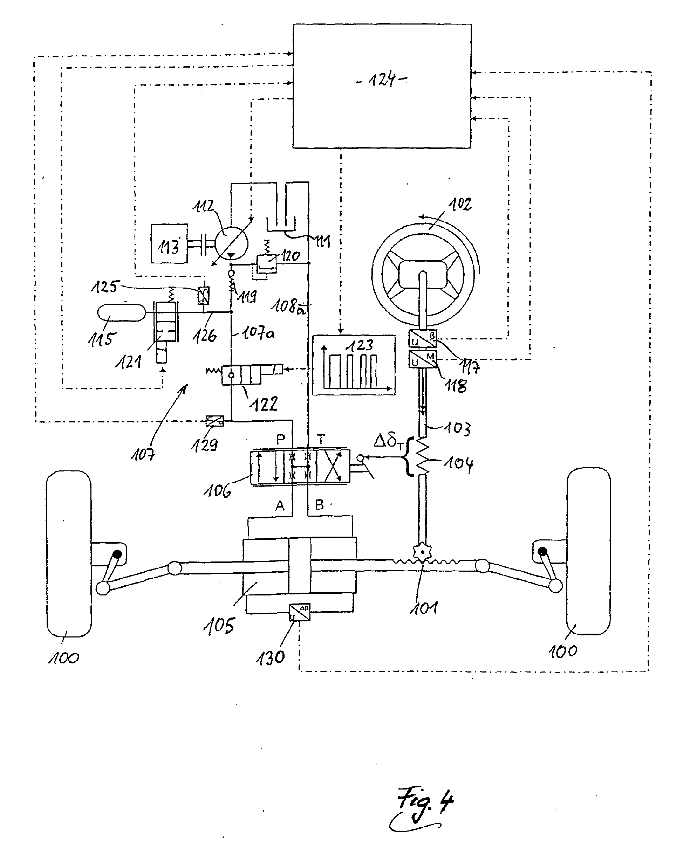

Eine weitere Variante zur Umsetzung einer geeigneten Ladestrategie und Entladestrategie des Druckspeichers 115 ist die Nutzung funktioneller Freiheitsgrade durch den Einbau eines elektrisch angesteuerten Speicherventils 121, so wie dies in **Figur 4** figürlich dargestellt ist. Somit kann insbesondere beim Einlenken ein gleichmäßiger, schwingungsfreier Druckaufbau in der Hydraulikleitung 107a des Druckbereichs 107 eingeregelt werden. Weitere Zusatzfunktionen eines elektrisch angesteuerten Speicherventils 121 zur Steuerung des Flusses der hydraulischen Energie im System bzw. im Druckbereich 107 des Lenkhilfesystems sind denkbar. Damit die elektronische Steuereinheit 124 das Speicherventil 121 geeignet ansteuern kann, kann zumindest ein weiterer Drucksensor vorgesehen sein. In **Figur 4** sind derer zwei dargestellt, nämlich ein erster Drucksensor 129 an der Hydraulikleitung 107a zwischen dem Freigabeventil 122 und der Druckseite P des Lenkventils 106, sowie ein zweiter Differenz-Drucksensor 130 an den Arbeitskammern des Lenkzylinders 105. Insbesondere im Falle einer Ansteuerung des Speicherventils 121 durch eine bzw. die elektronische Steuereinheit 124 sind jedoch auch andere Ansteuerkriterien als der genannte Druckangleich möglich, so bspw. eine zeitliche Ansteuerung oder eine Ansteuerung anhand einer geeigneten Abfrage, ob die Hydraulikpumpe 112 einen ausreichenden Volumenstrom fördert.

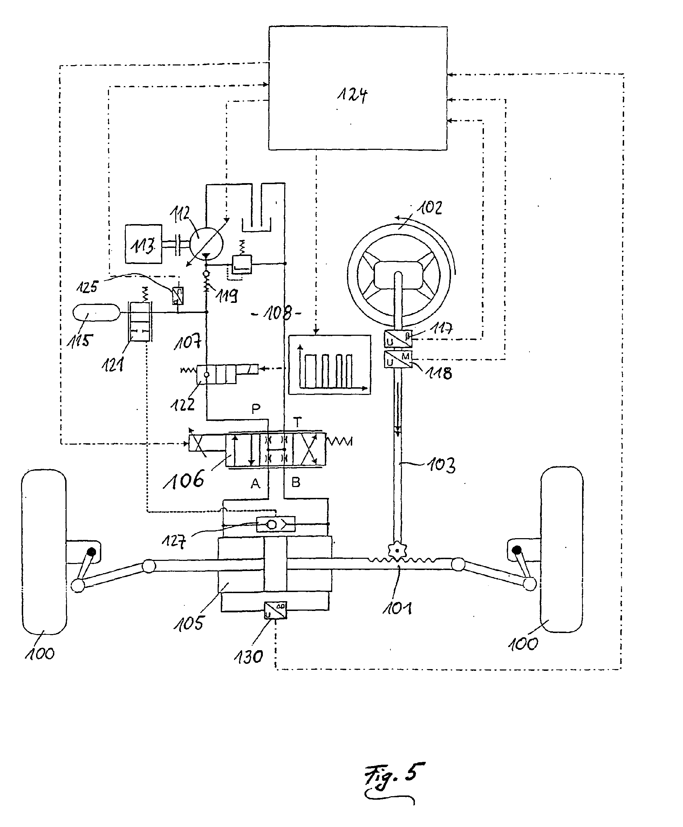

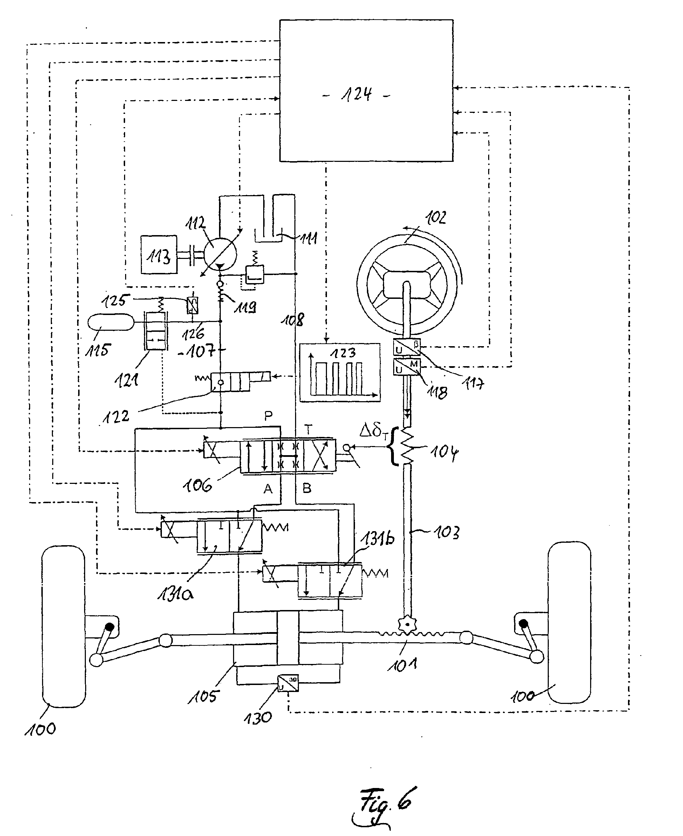

Während bei den soweit geschilderten Ausführungsbeispielen nach den **Figuren 1-4** das Lenkventil 106 (mit offener Mitte) wie bei open-center-Lenkhilfesystemen üblich rein mechanisch von einem Torsionsstab 104 in der Lenkspindel 103 angesteuert bzw. betätigt wird, ist alternativ auch der Einsatz von elektrohydraulischen Ventilen zur Regelung des Lenkmomentes oder auch zum aktiven Eingriff ins Lenkgeschehen denkbar. Zu diesem Zweck sind zwei mögliche Anordnungen in den **Figuren 5 und 6** dargestellt.

Bei der Ausführungsform nach **Figur 5** ist das zentrale Lenkventil 106 durch die elektronische Steuereinheit 124 elektrohydraulisch angesteuert und wird nicht mehr über eine mechanische Ansteuerung, z.B. durch die Verdrehung eines Torsionsstabes, betätigt, wobei es sich jedoch weiterhin um ein Lenkventil mit offener Mitte handelt. Bei der Ausführungsform nach **Figur 6** ist wieder ein mechanisches Drehschieber-Lenkventil 106 für die Regelung der Lenkunterstützung vorgesehen. Ein aktiver Eingriff ins Lenkgeschehen kann jedoch über die beiden in den den Ausgängen A, B des Lenkventils 106 zugeordneten Zuleitungen des Lenkzylinders 105 angeordneten und durch die elektronische Steuereinheit 124 elektrisch hinsichtlich ihres Durchlassquerschnittes stetig verstellbaren Ventile 131 a, 131 b erfolgen. Der Vorteil dieses Systems ist, dass bei einem Ausfall dieser Ventile 131 a, 131 b die Grundfunktion "Lenken mit Lenkunterstützung" vollständig erhalten bleibt.

Nach einer weiteren Ausführungsform kann zur Regelung des Förder-Volumenstromes der regelbaren Hydraulikpumpe die zur entsprechenden Einstellung erforderliche Energie aus dem Druck des Druckspeichers abgezogen werden. Vorzugsweise ist die regelbare Hydraulikpumpe als Verstellpumpe mit hydraulischer Pumpenverstellung ausgebildet und es erfolgt eine Verstellung über entsprechende Druckbeaufschlagung aus dem Druck des Druckspeichers. Ferner kann die Hydraulikpumpe über eine hydraulisch schaltbare Kupplung mit einem Antriebsaggregat verbunden sein und ein Schaltvorgang der Kupplung über entsprechende Druckbeaufschlagung aus dem Druck des Druckspeichers erfolgen. Aufgrund der Tatsache, dass im Hydraulik-Druckspeicher stets hydraulische Energie zur Verfügung steht, kann diese nämlich vorteilhafterweise zur Regelung oder Verstellung der regelbaren Hydraulikpumpe herangezogen werden, wenn diese als Verstellpumpe ausgebildet ist. Solche Verstellpumpen werden nach dem gegenwärtigen Stand der Technik meist mit Hilfe hydraulischer Ventile und über hydraulische Wirkflächen (z.B. Hydraulikzylinder) verstellt. Die Voraussetzung hierfür ist allerdings, dass auch stets hydraulische Energie zur Verfügung steht, was bspw. bei einem konventionellen Open-Center-Lenksystem (entsprechend **Figur 8)** nicht der Fall ist. Eine Verstellpumpe in einem solchen konventionellen Lenksystem muss somit die von ihr benötigte hydraulische Stellenergie selbst erzeugen, so dass der Volumenstrom der Pumpe auch bei Geradeausfahrt des Fahrzeugs (wenn also kein Bedarf nach Lenkunterstützung vorliegt) nicht bis auf den Wert "Null" reduziert werden kann. Nachteiligerweise muss also eine Verstellpumpe in einem konventionellen Open-Center-Lenksystem auch bei Geradeausfahrt eine hydraulische Leistung erzeugen, die größtenteils in Verlustleistung umgesetzt wird.

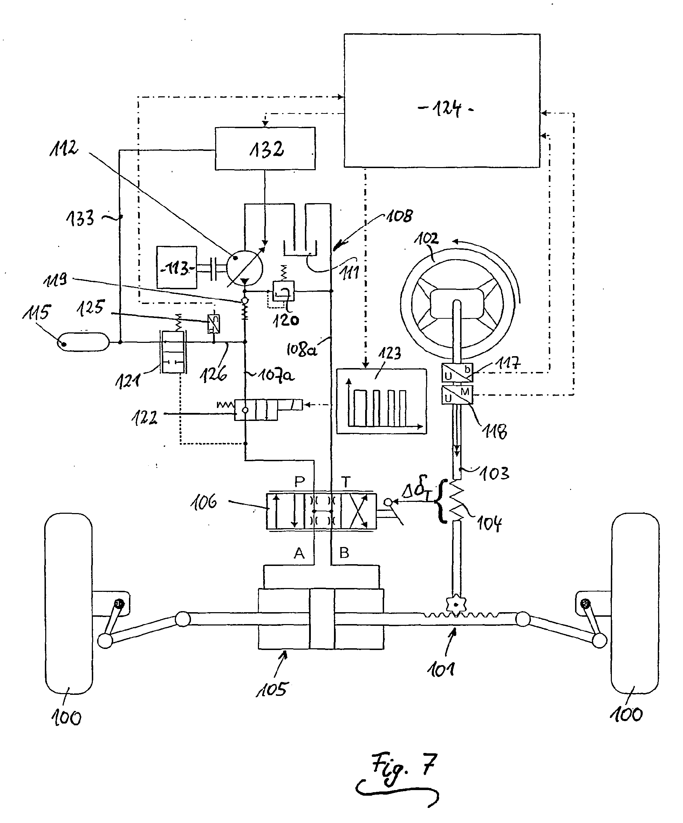

Dieser Nachteil kann nun aufgrund der vorhandenen hydraulischen Energie im vorhandenen Druckspeicher eliminiert werden. Die Verstellpumpe kann also dann, wenn bei beladenem Druckspeicher keine Lenkenergie benötigt wird, mit Hilfe einer hydraulischen Verstellvorrichtung in den sog. Nullhub verstellt werden, d.h. praktisch vollständig abgeschaltet werden, was eine deutliche Minderung der Leistungsaufnahme zur Folge hat. Wenn hingegen zu einem späteren Zeitpunkt Bedarf an Pumpen-Förderleistung besteht, so kann die Pumpe mit Hydraulikdruck aus dem Druckspeicher einfach aktiviert werden. In der beigefügten **Figur 7** ist dabei unter der Bezugsziffer 132 abstrakt eine sog. hydraulische Pumpenverstellung dargestellt, die auf die Verstellpumpe 112 bzw. auf die regelbare Hydraulikpumpe 112 bei entsprechender Ansteuerung durch die elektronische Steuereinheit 124 im Verstellsinne einwirken kann. Die hierfür erforderliche Energie bezieht diese hydraulische Pumpenverstellung 132 aus dem Druckspeicher 115, und zwar über eine Hydraulik-Versorgungsleitung 133.

Neben einer Verstellung des Verdrängungsvolumens der regelbaren Hydraulikpumpe bzw. Verstellpumpe kann ein Teil der Energie aus dem Druckspeicher auch für das Schalten einer Kupplung genutzt werden, mit der die Hydraulikpumpe vollständig von einem für ihren Antrieb vorgesehenen Antriebsaggregat getrennt werden kann.

Insgesamt stellt das beschriebene Lenksystem vom Arbeitsprinzip her ein Lenksystem dar, welches zwischen den beiden bereits existierenden Lenksystemen mit einem Open-Center-Lenkventil einerseits und einem Closed-Center-Lenkventil andererseits steht. Dabei sind die Vorteile beider Systeme in einem Lenksystem vereint und deren jeweiligen Nachteile werden vermieden. Insbesondere zeichnet sich ein erfindungsgemäßes Servo-Lenksystem durch optimales Ansprechverhalten und exzellentes Lenkgefühl im Lenkrad 102 bei minimiertem Energiebedarf (und somit optimierten Wirkungsgrad) aus, wobei noch darauf hingewiesen sei, dass durchaus eine Vielzahl von Details abweichend von obigen Erläuterungen gestaltet sein kann, ohne den Inhalt der Patentansprüche zu verlassen.

### Bezugszeichenliste:

- 100: lenkbares Vorderrad
- 101: Lenkgetriebe
- 102: Lenkrad
- 103: Lenkspindel
- 104: Torsionsstab
- 105: Lenkzylinder
- 106: Lenkventil (open-center)
- 106': Lenkventil (open-center), Stand der Technik
- 106": Lenkventil (closed-center), Stand der Technik
- 107: Druckbereich
- 107a: Hydraulikleitung in 107
- 108: Tankbereich
- 108a: Hydraulikleitung in 108
- 109: Wärmetauscher
- 110: Filter
- 111: Hydrauliktank
- 112: regelbare Hydraulikpumpe, Verstellpumpe
- 112': Hydraulikpumpe
- 113: Antriebsaggregat (des Kraftfahrzeugs)
- 114: Ventil, Drei-Wege-Stromregelventil
- 115: Druckspeicher
- 116: schaltbare Kupplung
- 117: Drehwinkelsensor
- 118: Drehmomentsensor
- 119: Rückschlagventil
- 120: Druckbegrenzungsventil
- 121: Speicherventil
- 122: Freigabeventil
- 123: pulsweitenmoduliertes Signal (von 124)
- 124: elektronische Steuereinheit
- 125: Drucksensor
- 126: Stichleitung (von 107a zu 115)
- 127: Wechselventil
- 128: Bypasskanal
- 128a: Rückschlagventil in 128
- 129: Drucksensor
- 130: Differenz-Drucksensor
- 131 a: stetig verstellbares Ventil
- 131 b: stetig verstellbares Ventil
- 132: hydraulische Pumpenverstellung
- 133: Hydraulik-Versorgungsleitung

## Patentansprüche

1. Hydraulisches Servo-Lenksystem mit offener Mitte (Open-Center-Lenksystem), wobei ein die Unterstützungskraft in ein Lenkgetriebe (101) einleitender Lenkzylinder (105) über ein Lenkventil (106) in Form eines mechanisch verstellbaren Drehschieberventils ähnlich den üblichen Open-Center-Lenkventilen oder ein elektrohydraulisches Lenkventil, stets mit einem Druckbereich (107) und einem Tankbereich (108) eines Hydraulikkreislaufs verbunden ist, weiterhin mit einer hinsichtlich ihres Förder-Volumenstromes regelbaren Hydraulikpumpe (112) und einem Druckspeicher (115) für das Hydraulikmedium im Druckbereich (107), und ferner mit einem stromauf des Lenkventils (106) vorgesehenen Freigabeventil (122), über das der Volumenstrom im Druckbereich (107) einstellbar ist, wobei
dem Druckspeicher (115) ein ansteuerbares Speicherventil (121) vorgeschaltet ist, **dadurch gekennzeichnet, dass** das Speicherventil schließt, sobald während eines Lenkvorganges der Hydraulikdruck im Druckbereich (107) zwischen dem Freigabeventil (122) und der druckbeaufschlagten Kammer des Lenkzylinders (105) die Höhe des Druckes im Druckspeicher (115) erreicht.

2. Hydraulisches Servo-Lenksystem nach Anspruch 1,
**dadurch gekennzeichnet, dass** der Öffnungsgrad des Freigabeventils (122) an die Höhe des/der mittels zumindest eines geeigneten Sensors (117, 118) ermittelten, vom Fahrer vorgegebenen Lenkwinkels und/oder Lenkwinkelgeschwindigkeit und/oder Lenkmoments gekoppelt ist.

3. Hydraulisches Servo-Lenksystem nach Anspruch 1 oder 2,
**dadurch gekennzeichnet, dass** zur Ansteuerung des Speicherventils (121) die mittels eines Wechselventils (127) am Lenkzylinder (105) vorliegende Druckdifferenz herangezogen wird.

4. Hydraulisches Servo-Lenksystem nach einem der vorangegangenen Ansprüche, **dadurch gekennzeichnet, dass** der Druckspeicher (115) unter Umgehung des Speicherventils (121) über ein vom Druckspeicher (115) weg öffnendes Rückschlagventil (128a) mit dem Druckbereich (107) des Hydraulikkreislaufs verbunden ist.

5. Hydraulisches Servo-Lenksystem nach einem der vorangegangenen Ansprüche, **dadurch gekennzeichnet, dass** das Lenkventil (106) zumindest im dem Tankbereich (108) zugeordneten Leitungsabschnitt einen höheren Druckverlust als übliche Open-Center-Lenkventile verursacht.

6. Hydraulisches Servo-Lenksystem nach einem der vorangegangenen Ansprüche, **dadurch gekennzeichnet, dass** zum mechanisch verstellbaren Lenkventil (106) hinsichtlich ihres Durchlassquerschnittes stetig verstellbare elektrohydraulische Ventile (131 a, 131b) zur Modulation des Lenkmoments in Reihe geschaltet sind.

7. Hydraulisches Servo-Lenksystem nach einem der vorangegangenen Ansprüche, **dadurch gekennzeichnet, dass** zur Regelung des Förder-Volumenstromes der regelbaren Hydraulikpumpe (112) die zur entsprechenden Einstellung erforderliche Energie aus dem Druck des Druckspeichers (115) abgezogen wird.

8. Hydraulisches Servo-Lenksystem nach einem der vorangegangenen Ansprüche, **dadurch gekennzeichnet, dass** die regelbare Hydraulikpumpe als Verstellpumpe mit hydraulischer Pumpenverstellung ausgebildet ist und eine Verstellung über entsprechende Druckbeaufschlagung aus dem Druck des Druckspeichers (115) erfolgt.

9. Hydraulisches Servo-Lenksystem nach einem der vorangegangenen Ansprüche, **dadurch gekennzeichnet, dass** die regelbare Hydraulikpumpe über eine hydraulisch schaltbare Kupplung mit einem Antriebsaggregat verbunden ist und ein Schaltvorgang der Kupplung über entsprechende Druckbeaufschlagung aus dem Druck des Druckspeichers (115) erfolgt.

10. Betriebsverfahren für ein hydraulisches Servo-Lenksystem nach einem der vorangegangenen Ansprüche, **dadurch gekennzeichnet, dass** mit Ausnahme einiger Betriebszustände, insbesondere mit Ausnahme von Hochgeschwindigkeitsfahrten, bei einer Fortbewegung ohne Einlenken das Freigabeventil (122) nur einen kleiner Volumenstrom durch das Lenkventil (106) zulässt und dann der Druckspeicher (115) durch entsprechende Ansteuerung der Hydraulikpumpe (112) über das offene Speicherventil (121) bedarfsweise befüllt wird, während beim Einlenken das Freigabeventil (122) vollständig geöffnet wird, was ein Abströmen von Hydraulikmedium aus dem Druckspeicher (115) bewirkt, solange bis die Hydraulikpumpe (112) einen ausreichenden Volumenstrom fördert und das Speicherventil (121) schließt.

## Claims

1. A hydraulic power-assisted steering system with an open centre (open centre steering system), wherein a steering cylinder (105) introducing the assisting force into a steering gear (101) is constantly connected to a pressure region (107) and a tank region (108) of a hydraulic circuit via a steering valve (106) in the form of a mechanically adjustable rotary valve similar to the conventional open centre steering valves or an electro-hydraulic steering valve, furthermore comprising a hydraulic pump (112) which can be controlled with regard to its conveying volume flow and an accumulator (115) for the hydraulic medium in the pressure region (107), and furthermore comprising a release valve (122) provided upstream from the steering valve (106), via which the volume flow in the pressure region (107) can be adjusted, wherein a controllable accumulator valve (121) is connected upstream from the accumulator (115), **characterised in that** the accumulator valve closes as soon as the hydraulic pressure in the pressure region (107) between the release valve (122) and the pressure-loaded chamber of the steering cylinder (105) during a steering process reaches the level of the pressure in the accumulator (115).

2. A hydraulic power-assisted steering system according to claim 1, **characterised in that** the degree of opening of the release valve (122) is coupled to the level of the steering angle and/or steering angle speed and/or steering torque specified by the driver and determined by means of at least one suitable sensor (117, 118).

3. A hydraulic power-assisted steering system according to claim 1 or 2, **characterised in that** the pressure difference existing owing to an alternating check valve (127) at the steering cylinder (105) is used to control the accumulator valve (121).

4. A hydraulic power-assisted steering system according to any one of the preceding claims, **characterised in that** the accumulator (115) is connected to the pressure region (107) of the hydraulic circuit with circumvention of the accumulator valve (121) via a check valve (128a) opening away from the accumulator (115).

5. A hydraulic power-assisted steering system according to any one of the preceding claims, **characterised in that** the steering valve (106), at least in the line section associated with the tank region (108) causes a higher pressure loss than conventional open centre steering valves.

6. A hydraulic power-assisted steering system according to any one of the preceding claims, **characterised in that** constantly adjustable electro-hydraulic valves (131 a, 131 b) for the modulation of the steering torque are connected in series to the mechanically adjustable steering valve (106) with regard to their admission cross section.

7. A hydraulic power-assisted steering system according to any one of the preceding claims, **characterised in that** to control the conveying volume flow of the controllable hydraulic pump (112), the energy required for the corresponding adjustment is drawn from the pressure of the accumulator (1 15).

8. A hydraulic power-assisted steering system according to any one of the preceding claims, **characterised in that** the controllable hydraulic pump is configured as a variable displacement pump with a hydraulic pump adjustment and an adjustment takes place by means of corresponding pressure loading from the pressure of the accumulator (115).

9. A hydraulic power-assisted steering system according to any one of the preceding claims, **characterised in that** the controllable hydraulic pump is connected to a drive unit via a hydraulically switchable coupling and a switching process of the coupling takes place via corresponding pressure loading from the pressure of the accumulator (115).

10. An operating method for a hydraulic power-assisted steering system according to any one of the preceding claims, **characterised in that** with the exception of a few operating states, more especially with the exception of high speed journeys, during a movement without turning, the release valve (122) only allows a small volume flow through the steering valve (106) and then the accumulator (115) is filled if necessary by corresponding control of the hydraulic pump (112) via the open accumulator valve (121), while during turning, the release valve (122) is completely opened, which brings about a flowing of hydraulic medium out of the accumulator (115) until the hydraulic pump (112) conveys an adequate volume flow and the accumulator valve (121) closes.

## Revendications

1. Système de direction assistée hydraulique à milieu ouvert (système de direction à centre ouvert) selon lequel un vérin de direction (105) qui applique la force d'assistance à la transmission de direction (101) est relié par une vanne de direction (106) sous la forme d'un distributeur à boisseau tournant, à réglage mécanique, analogue aux vannes de direction à centre ouvert où une vanne électro-hydraulique, en permanence à une zone de pression (107) et à une zone de réservoir (108) d'un circuit hydraulique,
ainsi qu'à une pompe hydraulique (112) à débit volumique de refoulement réglable et accumulateur de pression (115) pour le liquide hydraulique dans la zone de pression (107), et en outre à une vanne de libération (122) en amont de la vanne de direction (106), qui règle le débit volumique dans la zone de pression (107),
l'accumulateur de pression (115) ayant en amont une vanne d'accumulation commandée (121),
**caractérisé en ce que**
la vanne d'accumulation se ferme dès que, pendant une manoeuvre de direction, la pression hydraulique dans la zone de pression (107) entre la vanne de libération (122) et la chambre mise en pression du vérin de direction (107) atteint le niveau de pression dans l'accumulateur de pression (115).

2. Système de direction assistée hydraulique à milieu ouvert selon la revendication 1,
**caractérisé en ce que**
le degré d'ouverture de la vanne de libération (122) est couplé sur le niveau de ou des angles de braquage prédéfinis par le conducteur, détectés par au moins un capteur approprié (117, 118) et/ou la vitesse de braquage (vitesse d'angle de direction) et/ou le couple de braquage (couple de direction).

3. Système de direction assistée hydraulique à milieu ouvert selon la revendication 1 ou 2,
**caractérisé en ce que**
la différence de pression appliquée au vérin de direction (105) par une vanne de commutation (127) commande la vanne d'accumulation (121).

4. Système de direction assistée hydraulique à milieu ouvert selon l'une des revendications précédentes,
**caractérisé en ce que**
l'accumulateur de pression (115) est relié à la plage de pression (107) du circuit hydraulique en contournant la vanne d'accumulation (121) par un clapet anti-retour (128) s'ouvrant dans le sens partant de l'accumulateur de pression (115).

5. Système de direction assistée hydraulique à milieu ouvert selon l'une des revendications précédentes,
**caractérisé en ce que**
la vanne de direction (106) produit au moins dans le segment de conduite associé à la zone de réservoir (108), une perte de pression plus élevée que les habituelles vannes de direction à centre ouvert.

6. Système de direction assistée hydraulique à milieu ouvert selon l'une des revendications précédentes,
**caractérisé en ce que**
des vannes électro-hydrauliques (131a, 131b) sont branchées en série pour moduler le couple de direction pour le réglage continu de la section de passage de la vanne de direction (106) à réglage mécanique.

7. Système de direction assistée hydraulique à milieu ouvert selon l'une des revendications précédentes,
**caractérisé en ce que**
pour réguler le débit volumique de refoulement de la pompe hydraulique réglable (112), on prélève l'énergie nécessaire au réglage correspondant à l'aide de la pression de l'accumulateur de pression (115).

8. Système de direction assistée hydraulique à milieu ouvert selon l'une des revendications précédentes,
**caractérisé en ce que**
la pompe hydraulique réglable est une pompe réglable à réglage hydraulique et le réglage se fait par l'application d'une pression correspondante fournie par l'accumulateur de pression (115).

9. Système de direction assistée hydraulique à milieu ouvert selon l'une des revendications précédentes,
**caractérisé en ce que**
la pompe hydraulique réglable est reliée par un embrayage à commutation hydraulique à un groupe d'entraînement et la commutation de l'embrayage se fait par l'application d'une pression correspondante fournie par l'accumulateur de pression (115).

10. Procédé de gestion d'un système de direction assistée hydraulique selon l'une des revendications précédentes,
**caractérisé en ce qu'**
à l'exception de quelque états de fonctionnement notamment à l'exception du déplacement à vitesse élevée, en cas de déplacement sans braquage, la vanne de libération (122) n'autorise qu'un faible débit volumique à travers la vanne de direction (106) et ensuite l'accumulateur de pression (115) est rempli si besoin par une commande appropriée de la pompe hydraulique (112) à travers la vanne d'accumulation (121) ouverte, alors qu'en cas de braquage, la vanne de libération (122) est complètement ouverte, produisant la sortie de liquide hydraulique de l'accumulateur de pression (115) aussi longtemps que la pompe hydraulique (112) débite un débit volumique suffisant et que la vanne d'accumulation (121) est fermée.
